Europäisches Patentamt

European Patent Office

Office européen des brevets

(19)

(11) Veröffentlichungsnummer : **0 287 800 B1**

# EUROPÄISCHE PATENTSCHRIFT

(12)

(45) Veröffentlichungstag der Patentschrift :
24.04.91 Patentblatt 91/17

(51) Int. Cl.⁵ : **B29C 47/14**, // B29K21/00,
B29L30/00

(21) Anmeldenummer : **88103948.1**

(22) Anmeldetag : **12.03.88**

(54) Extrusionskopf mit einer Klemmeinrichtung für die Werkzeugteile.

(30) Priorität : **11.04.87 DE 3712343**

(43) Veröffentlichungstag der Anmeldung :
26.10.88 Patentblatt 88/43

(45) Bekanntmachung des Hinweises auf die
Patenterteilung :
24.04.91 Patentblatt 91/17

(84) Benannte Vertragsstaaten :
**DE ES FR GB IT**

(56) Entgegenhaltungen :
**CH-A- 509 147**
**DE-A- 2 457 532**
**FR-A- 1 225 865**
**FR-A- 1 304 341**

(73) Patentinhaber : **Fried. Krupp Gesellschaft mit
beschränkter Haftung
Altendorfer Strasse 103
W-4300 Essen 1 (DE)**

(72) Erfinder : **Hirschkorn, Ingo
Hauptstrasse 63
W-2153 Neu Wulmstorf (DE)**

**Beschreibung**

Die Erfindung betrifft einen Extrusionskopf nach dem Oberbegriff des Anspruchs 1.

Klemmeinrichtungen für Extrusionswerkzeuge von insbesondere Kautschukmischungen verarbeitenden Extrusionsköpfen bestehen aus den eigentlichen Klemmelementen und die diese bewegenden Antriebseinheiten, in erster Linie Hydraulikzylindern. Dabei können die Klemmelemente sowohl als Klemmkeile (siehe z.B. DD-PS 124 369) als auch als schwenkbare Hebel (siehe z.B. DE-OS 24 57 532) ausgebildet sein. Bei Betriebsbereitschaft des Extrusionskopfes üben die Klemmelemente eine große Kraft auf die Profil- oder Fertigleiste aus, so daß diese mit der Kassette dichtend an bzw. in den Extrusionskopf gedrückt wird.

In vielen Fällen ist zur Herstellung eines neuen Profilstreifens – insbesondere zur Herstellung eines solchen aus mehreren Kautschukmischungskomponenten – lediglich eine andere bzw. neue Profil- oder Fertigleiste erforderlich und die bereits benutzte Kassette kann beibehalten werden. Beim Wechsel bzw. Ausbau der Fertigleiste eines Extrusionskopfes muß aber die Kassette in der Regel mit ausgebaut werden, weil die Kassette durch das Nachlassen des äußeren Andrucks beim Zurückziehen der Klemmkeile nicht mehr fest in der entsprechenden Ausnehmung des Extrusionskopfes anliegt und das zu verarbeitende Kautschukmaterial in die gemeinsame Flächenpaarung der Kassette und des Extrusionskopfes bzw. der Kopfteile des Extrusionskopfes fließen kann. Nach erneuter Inbetriebnahme des Extrusionskopfes führt der derart gebildete Kautschukfilm zu einer von der definierten Lage abweichenden Lage der Extrusionswerkzeuge und ggf. zu einer Verklemmung der Klemmkeile in deren Führung. Ein gleichzeitiger Wechsel der Kassette führt aber zu unerwünschten langen Stillstandszeiten der gesamten Extrusionsanlage.

Zum Ausdrücken der Kassette aus dem Extrusionskopf ist es noch bekannt, separate, seitlich angeordnete Zylinder zu verwenden.

Der Erfindung liegt die Aufgabe zugrunde, einen Extrusionskopf der eingangs genannten Art zu schaffen, bei dem die Profilleiste mit einfachen konstruktiven Mitteln unabhängig von der Kassette gewechselt werden kann.

Diese Aufgabe wird durch die im kennzeichnenden Teil des Anspruchs 1 angegebenen Merkmale gelöst. Dabei erfolgt ein separates Andrücken der Kassette durch zusätzliche Klemmelemente. Da diese außerhalb der für die Fertigleiste vorgesehenen Fläche angeordnet sind, kann die Fertigleiste in einfacher Weise ungehindert ausgebaut und gewechselt werden.

Wenn die Klemmkeile nach dem Wechsel der Fertigleiste wieder auf diese wirken und mit dieser auch die Kassette in den Extrusionskopf gedrückt wird, kann der Druck auf die zusätzlichen Klemmelemente wieder abgebaut werden.

Zum Ausbau und Wechsel einer Kassette werden die die Kassette andrückenden zusätzlichen Klemmelemente einfach aus dem Bereich der Kassette heraus genommen, so daß die Kassette ungehindert nach vorne entnommen werden kann.

Vorteilhafte Weiterentwicklungen der Erfindung sind in den Unteransprüchen beschrieben. So können durch die Verwendung von Hebeln nach Anspruch 2 günstige Kraftrichtungen verwirklicht werden. Mit den nach Anspruch 3 ausgebildeten Hebeln kann das sie betätigende Bewegungsorgan nicht nur zum Andrücken der Kassette, sondern auch zu deren Herausdrücken verwendet werden. Dadurch können separate Zylinder zum Herausdrücken eingespart werden. Durch die Verwendung von Rollen nach Anspruch 4, ergibt sich ein reibungsfreies Andrücken und durch die Anordnung der Schwenkachse nach Anspruch 5 gelangt das der Stirnseite der Kassette zugeordnete Ende der Hebel besonders schnell aus deren Bereich.

Ausführungsbeispiele des Gegenstandes der Erfindung sind in der Zeichnung dargestellt und werden im folgenden näher beschrieben. Es zeigen :

Fig. 1 einen Extrusionskopf in der Seitenansicht,

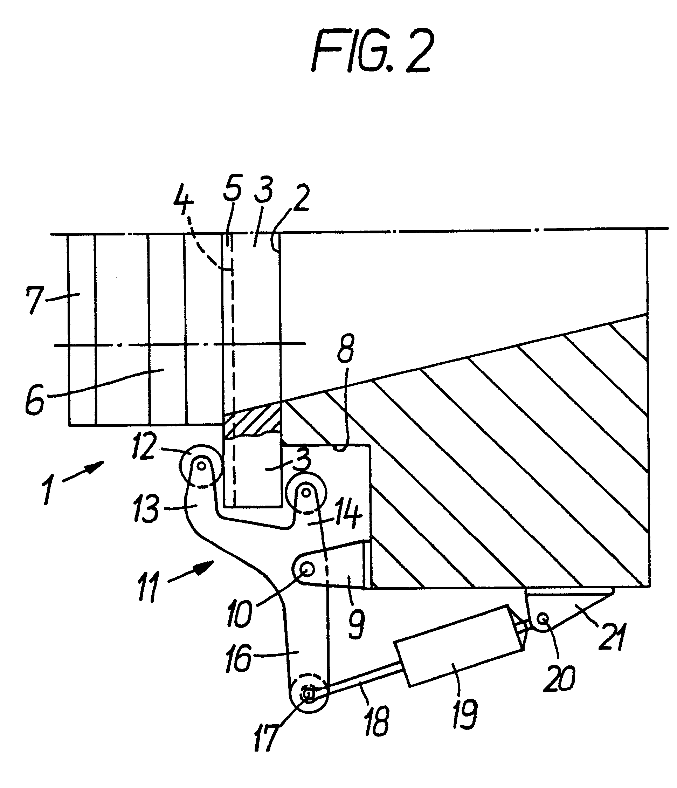

Fig. 2 den Extrusionskopf in einer teilweise geschnittenen Draufsicht,

Fig. 3 einen Extrusionskopf in einer anderen Ausführungsform in einer Seitenansicht und

Fig. 4 eine andere Ausführungsform einer Klemmeinrichtung in einer teilweise geschnittenen, auszugsweisen Draufsicht, wobei in den beiden Figuren 2 und 3 wegen der spiegelbildlichen Ausbildung der Einfachheit halber jeweils lediglich eine durch die Symmetrielinie begrenzte Hälfte dargestellt ist.

Im betriebsbereiten Zustand des Extrusionskopfes 1 befindet sich in einer entsprechenden Ausnehmung 2 eine Kassette 3, die wiederum mit einer Ausnehmung 4 zur Aufnahme einer Profil- oder Fertigleiste 5 versehen ist. Gegen die Stirnfläche der Fertigleiste 5 ist jeweils schräg von oben und unten ein Klemmkeil 6 gerichtet, der zwischen dem Extrusionskopf 1 und einem zugeordneten Klemmkeilhalter 7 geführt und durch einen (nicht dargestellten) Hydraulikzylinder in bezug auf die Fertigleiste 5 bewegbar ist. Durch entsprechende Beaufschlagung des Klemmkeils 6 kann die Profilleiste 5 und mit ihr die Kassette 3 dichtend in den Extrusionskopf 1 bzw. in die Kopfteile des Extrusionskopfes gedrückt werden.

Im Bereich der seitlichen Enden der Kassette 3 weist der Extrusionskopf 1 Ausnehmungen 8 auf, in denen Lagerstützen 9 angeordnet sind, wobei die Lagerstützen 9 jeweils einer Seite eine senkrechte Achse 10 bilden. Um jede senkrechte Achse 10 sind jeweils zwei Y-förmig ausgebildete doppelarmige Hebel 11 schwenkbar gelagert. Die beiden gabelförmig gestalteten und jeweils mit einer Rolle 12 ausgerüsteten Zweige 13, 14 des Hebels 11 umfassen jeweils ein seitliches Ende der Kassette 3, wobei der vordere Zweig 13 jeweils gegen die Stirnseite und der hintere Zweig 14 gegen die Rückseite der Kassette 3 schwenkbar ist.

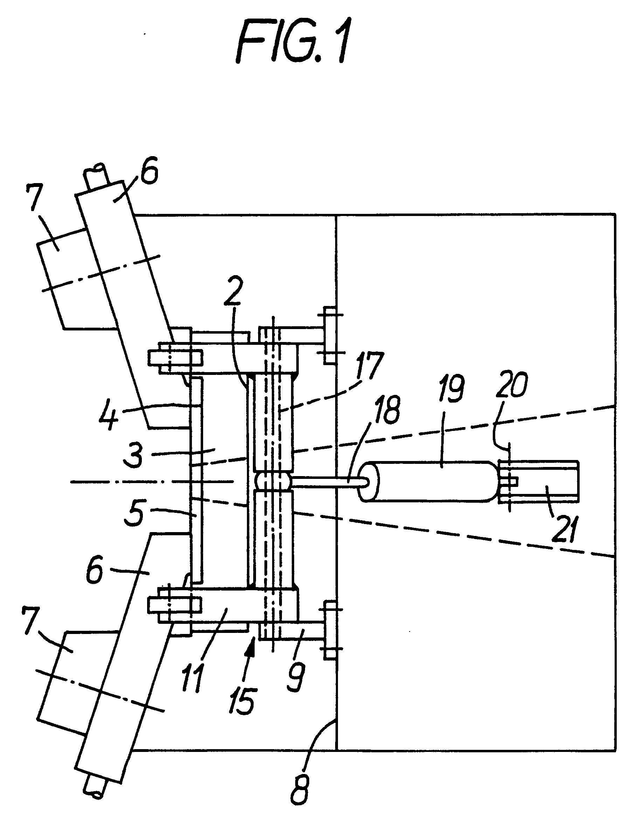

Bei dem Ausführungsbeispiel gemäß Fig. 1 sind jeweils zwei Hebel 11 zu einer klauenartigen Einheit 15 zusammmgengefaßt. Die von der Kassette 3 wegweisenden Enden 16 der Hebel 11 weisen eine gemeinsame Stange 17 auf, an der die Kolbenstange 18 eines doppeltwirkenden Hydraulikzylinders 19 angelenkt ist, der sich wiederum an einem Gelenkpunkt 20 einer mit dem Extrusionskopf verbundenen Konsole 21 abstützt.

Die Schwenkachse 10 der Hebeleinheit 15 liegt hinter der Stirnfläche der Kassette 3, um ein schnelles Ausschwenken des vorderen Zweiges 13 der Hebel 11 aus dem Bereich der Kassette zu bewirken.

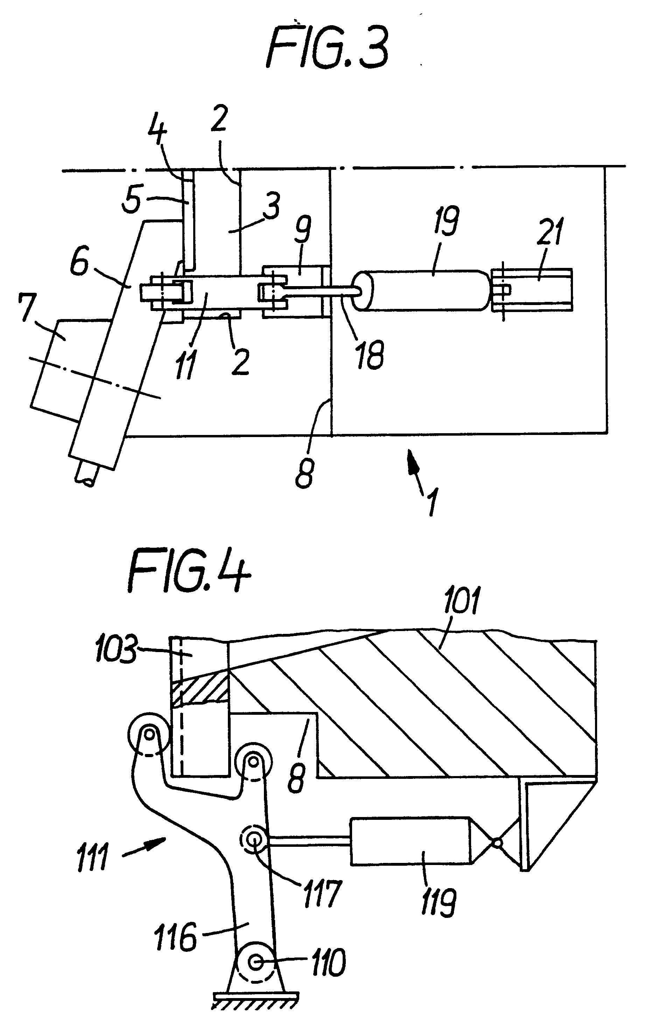

Bei dem Ausführungsbeispiel gemäß Fig. 3 ist jedem Hebel 11 ein gesonderter Zylinder 19 zugeordnet.

Zum Wechsel allein der Fertigleiste 5 werden zunächst die Zylinder 19 derart beaufschlagt, daß die vorderen Zweige 13 über die Rollen 12 gegen die Kassette 3 drücken und diese fest im Extrusionskopf 1 halten. Danach werden die Klemmkeile 6 zurückgefahren und die Fertigleiste 5 gewechselt. Nach dem erneuten Andrücken der Klemmkeile 6 gegen die (neue) Fertigleiste 5 können die Hydraulikzylinder 19 wieder entspannt werden.

Zum Wechseln der Fertigleiste 5 und der Kassette 3 werden wieder die Klemmkeile 6 gelöst und zurückgefahren. Zum Ausbau der Kassette 3 werden die Hydraulikzylinder 19 nun derart beaufschlagt, daß die hinteren Zweige 14 der Hebel 11 gegen die Rückseite der Kassette 3 drücken und diese aus dem Extrusionskopf 1 heraus bewegen. Die vorderen Zweige 13 der Hebel 11 dienen nicht nur zum Andrücken der Kassette 3 an den Extrusionskopf 1 beim Wechsel allein der Fertigleiste 5, sondern auch zum Einbau und Hineinschieben der Kassette 3 in den Extrusionskopf 1, wobei die Kassette 3 außerhalb des Extrusionskopfes 1 auf sog. (nicht dargestellten) Fangarmen liegt.

Bei dem Ausführungsbeispiel gemäß Fig. 4 ist der ebenfalls Y-förmig ausgebildete doppelarmige Hebel 111 mit seinem einfachen Ende 116 um eine – in bezug auf den Extrusionskopf 101 – feste senkrechte Achse 110 schwenkbar gelagert. In der Mitte der Hebel 111 greift bei 117 ein ggf. gemeinsamer Hydraulikzylinder 119 an, der an dem Extrusionskopf 101 angelenkt ist.

## Ansprüche

1. Extrusionskopf mit einer Fertigleiste (5) und einer Kassette (3) sowie einer Klemmeinrichtung für die Fertigleiste und die Kassette, wobei die Klemmeinrichtung je ein oberes und ein unteres auf die Fertigleiste und gegen diese unter Kraft bewegbares Klemmelement (6) aufweist, **dadurch gekennzeichnet, daß** die Klemmeinrichtung zusätzlich auf jeder Seite des Extrusionskopfes (1 ; 101) Klemmelemente (11 ; 111) aufweist, die außerhalb der Höhe der Fertigleiste (5) gegen die Stirnseite der Kassette (3) bewegbar und andrückbar sind.

2. Extrusionskopf nach Anspruch 1, dadurch gekennzeichnet, daß die zusätzlichen Klemmelemente (11 ; 111) als Hebel ausgebildet sind, die um eine – in bezug auf den Extrusionskopf (1 ; 101) – feste Achse (10 ; 110) schwenkbar gelagert sind und von denen das bzw. ein freies Ende (13) gegen die Stirnseite der Kassette (3) schwenkbar ist, wobei die Hebel (11 ; 111) allein oder zusammen mit einem Bewegungsorgan (19 ; 119) verbunden sind, das – in bezug auf den Extrusionskopf (1 ; 101) – eine feste Abstützung (20 ; 21) aufweist.

3. Extrusionskopf nach Anspruch 2, dadurch gekennzeichnet, daß die Breite der Kassette (3) größer ist als die entsprechende rückwärtige Anlagefläche (2) des Extrusionskopfes (1 ; 101) und daß das freie Ende (13) der Hebel (11 ; 111) einen zweiten, gegen die Rückseite der Kassette (3) schwenkbaren Zweig (14) aufweist.

4. Extrusionskopf nach Anspruch 2 oder 3, dadurch gekennzeichnet, daß das freie Ende (13) der Hebel (11 ; 111) bzw. der Zweige (13, 14) der Hebel eine Rolle (12) aufweist.

5. Extrusionskopf nach einem der Ansprüche 2 bis 4, dadurch gekennzeichnet, daß die Schwenkachse (10 ; 110) der Hebel (11 ; 111) hinter der Stirnseite der Kassette (3) liegt.

6. Extrusionskopf nach einem der Ansprüche 2 bis 5, dadurch gekennzeichnet, daß die Hebel (11) als doppelarmige Hebel ausgebildet sind, wobei das von der Kassette (3) abgewandte Ende (16) der Hebel (11) mit dem Bewegungsorgan (19) verbunden ist.

7. Extrusionskopf nach einem der Ansprüche 2 bis 6, dadurch gekennzeichnet, daß die Bewegungsorgane (19, 119) als Hydraulikzylinder ausgebildet sind.

## Claims

1. An extrusion head having a finishing die (5), a preforming die (3) and a clamping device for the finishing die and the preforming die, the clamping device having an upper and a lower clamping element (6) which can be forced towards and against the finishing die, characterized in that the clamping device also has on each side of the extrusion head (1, 101) clamping elements (11 ; 111) which can be moved and forced against the end face of the preforming die (3) outside the level of the finishing die (5).

2. An extrusion head according to claim 1, characterized in that the additional clamping elements (11 ; 111) take the form of levers which are mounted to pivot around an axis (10 ; 110) fixed in relation to the extrusion head (1 ; 101) and of which the or one free end (13) can be pivoted against the end face of the preforming die (3), the levers (11 ; 111) being connected individually or together to a motion element (19 ; 119) having a support (20 ; 21) fixed in relation to the extrusion head (1 ; 101).

3. An extrusion head according to claim 2, characterized in that the width of the preforming die (3) is greater than the corresponding rear bearing surface (2) of the extrusion head (1 ; 101), and the free end (13) of the levers (11 ; 111) has a second branch (14) which can be pivoted against the rear side of the preforming die (3).

4. An extrusion head according to claims 2 or 3, characterized in that the free end (13) of the levers (11 ; 111) and of the branches (13, 14) of the levers has a roller (12).

5. An extrusion head according to one of claims 2 to 4, characterized in that the pivoting axis (10 ; 110) of the levers (11 ; 111) lies behind the end face of the preforming die (3).

6. An extrusion head according to one of claims 2 to 5, characterized in that the levers (11) take the form of two-armed levers, the end (16) of the levers (11) remote from the preforming die (3) being connected to the motion element (19).

7. An extrusion head according to one of claims 2 to 6, characterized in that the motion elements (19; 119) take the form of hydraulic cylinders.

**Revendications**

1. Tête d'extrusion comprenant une plaque à profiler en forme définitive (5) et une cassette (3) ainsi qu'un dispositif de serrage pour la plaque à profiler en forme définitive et la cassette, le dispositif de serrage étant muni, respectivement, d'un élément de serrage (6) supérieur et inférieur pouvant être déplacé sur la plaque à profiler en forme définitive et contre celle-ci par une force motrice, caractérisée en ce que le dispositif de serrage comporte en plus sur chaque côté de la tête d'extrusion (1 ; 101) des éléments de serrage (11 ; 111) pouvant être déplacés et appuyés à l'extérieur de la hauteur de la plaque à profiler en forme définitive (5) contre la face frontale de la cassette (3).

2. Tête d'extrusion suivant la revendication 1, caractérisée en ce que les éléments de serrage supplémentaires (11 ; 111) sont réalisés en tant que leviers articulés de façon pivotante autour d'un axe (10 ; 110) fixe par rapport à la tête d'extrusion (1 ; 101) et dont l'extrémité ou dont l'extrémité libre (13) peut être pivotée contre la face frontale de la cassette (3), les leviers (11 ; 111) étant reliés seuls ou ensemble à un organe de déplacement (19 ; 119) qui présente un support solide (20 ; 21) par rapport à la tête d'extrusion (1 ; 101).

3. Tête d'extrusion suivant la revendication 2, caractérisée en ce que la largeur de la cassette (3) est plus grande que la face d'appui arrière (2) correspondante de la tête d'extrusion (1 ; 101), et en ce que l'extrémité libre (13) des leviers (11 ; 111) présente une seconde branche (14) pouvant être pivotée contre la face arrière de la cassette (3).

4. Tête d'extrusion suivant les revendications 2 ou 3, caractérisée en ce que l'extrémité libre (13) des leviers (11 ; 111) ou des branches (13, 14) des leviers présente un rouleau (12).

5. Tête d'extrusion suivant l'une des revendications 2 à 4, caractérisée en ce que l'axe pivotante (10; 110) des leviers (11 ; 111) est située derrière la face frontale de la cassette (3).

6. Tête d'extrusion suivant l'une des revendications 2 à 5, caractérisée en ce que les leviers (11) sont réalisés en tant que leviers à deux bras, l'extrémité (16) détournée de la cassette (3) des leviers (11) étant reliée à l'organe de déplacement (19).

7. Tête d'extrusion suivant l'une des revendications 2 à 6, caractérisée en ce que les organes de déplacement (19 ; 119) sont réalisés en tant que vérins hydrauliques.

# FIG.1

# FIG. 2

# FIG.3

# FIG.4